# EUROPEAN PATENT SPECIFICATION

(11) **EP 4 307 589 B1**
(45) Date of publication and mention of the grant of the patent: **13.08.2025**
(21) Application number: 22766317.6
(22) Date of filing: 09.03.2022
(51) Int. Cl.: H04L 1/00, H04L 1/16, H04L 1/1607, H04L 1/18, H04L 1/1829, H04L 1/1867, H04L 5/00

(54) **SEMI-STATIC HARQ-ACK CODEBOOK GENERATING METHOD AND TERMINAL**
VERFAHREN UND ENDGERÄT ZUR ERZEUGUNG EINES HALBSTATISCHEN HARQ-ACK-CODEBUCHS
PROCÉDÉ ET TERMINAL DE GÉNÉRATION DE LIVRE DE CODES HARQ-ACK SEMI-STATIQUE

(30) Priority: 10.03.2021 CN 202110262602
(43) Date of publication of application: 17.01.2024
(73) Proprietor: Vivo Mobile Communication Co., Ltd., Dongguan, Guangdong 523863 (CN)
(72) Inventor: LI, Na, Dongguan, Guangdong 523863 (CN)
(74) Representative: Conti, Marco
(86) International application number: PCT/CN2022/079863
(87) International publication number: WO 2022/188794

(56) References cited:
- EP-A1- 4 280 505
- WO-A1-2020/226547
- WO-A1-2021/017856
- WO-A1-2022/119394
- CN-A- 111 092 695
- CN-A- 111 726 204
- US-A1- 2017 347 341
- US-A1- 2020 106 566

## Description

### TECHNICAL FIELD

This application pertains to the field of wireless communication technologies, and specifically, to a method for generating a semi-static HARQ-ACK codebook, and a terminal.

### BACKGROUND

Entire information about hybrid automatic repeat request acknowledgment (Hybrid Automatic Repeat Request Acknowledgment, HARQ-ACK) fed back by user equipment (User Equipment, UE, also referred to as terminal) on a hybrid automatic repeat request (Hybrid Automatic Repeat Request, HARQ) feedback resource (physical uplink control channel (Physical Uplink Control Channel, PUCCH) or physical uplink shared channel (Physical Uplink Shared Channel, PUSCH)) is referred to as an HARQ-ACK codebook.

The semi-static HARQ-ACK codebook is also referred to as a type 1 HARQ-ACK codebook. A size of the codebook is unrelated to actual scheduling of physical downlink shared channel (Physical Downlink Shared Channel, PDSCH) or transmission of physical downlink control channel (Physical Downlink Control Channel, PDCCH), but depends on a configuration of radio resource control (Radio Resource Control, RRC) or a predefined parameter. When an RRC parameter pdsch-HARQ-ACK-Codebook = semi-static, the RRC parameter is configured as the semi-static HARQ-ACK codebook.

A method for generating a semi-static HARQ-ACK codebook includes the following steps:
(1) Determine a *K*₁ set associated with an active uplink bandwidth part (uplink bandwidth part, UL BWP).
   *K*₁ is one of important parameters for determining the HARQ-ACK codebook and refers to a slot or sub-slot offset value between the Physical Downlink Shared Channel and its corresponding feedback resource (PUCCH/PUSCH). For a *K*_{1,*k*} value corresponding to a specific PDSCH, a possible set is configured or predefined by RRC, and then a value in the possible set is indicated by a field in the corresponding scheduling downlink control information (Downlink Control Information, DCI) of the PDSCH. Herein, *K*_{1,*k*} is the value in the *K*₁ set, where k = 0, ..., M-1, M is the quantity of elements in the *K*₁ set associated with the active UL BWP, that is, cardinality of the *K*₁ set or a cardinal number of the *K*₁ set.
(2) Based on the *K*₁ set associated with the active UL BWP, determine the candidate PDSCH reception occasion.
   Specifically, for each *K*_{1,*k*} value in the *K*₁ set associated with the active UL BWP, the candidate PDSCH reception occasion in a slot corresponding to the *K*_{1,*k*} value is determined based on a time domain resource assignment (Time Domain Resource Assignment, TDRA) table corresponding to the PDSCH.
(3) Determine the semi-static HARQ-ACK codebook based on the candidate PDSCH reception occasion.

When the UE supports simultaneous service transmission of two types of PDSCHs, TDRA tables and/or *K*₁ sets of the two types of PDSCHs can be configured individually. However, in this case, how to determine the semi-static HARQ-ACK codebook is a technical problem to be resolved.

US2020106566 A1 discloses a method for transmitting or receiving groupcast feedback, which includes: receiving first sidelink control information (SCI) and first data corresponding to the first SCI, the first SCI including first priority information, receiving second SCI and second data corresponding to the second SCI, the second SCI including second priority information, identifying whether first feedback information associated with the first data or second feedback information associated with the second data is transmitted based on the first priority information or the second priority information when a resource for the first feedback information and a resource for the second feedback information are overlapped, and transmitting one of the first feedback information or the second feedback information which is associated with higher priority. WO2022119394A1, the priority date of which are prior to the date of filing of the present application and but were published after that date, discloses a method for transmitting a first physical uplink control channel (PUCCH) with first hybrid automatic repeat request acknowledgement (HARQ-ACK) information bits, which includes: receiving information for a set of PUCCH resources; determining values for the first HARQ-ACK information bits, determining a PUCCH resource from the set of PUCCH resources according to a combination of positive acknowledgement values and negative acknowledgement values for the first HARQ-ACK information bits, and transmitting the first PUCCH using the PUCCH resource. US2017347341A1 discloses a method of wireless communication performed by a user equipment (UE), which includes: receiving, from a network, a downlink transmission configuration indicating a transmit diversity downlink transmission mode of a plurality of downlink transmission modes; configuring downlink communication based on the transmit diversity downlink transmission mode according to the downlink transmission configuration; and receiving a service via point-to-multiple (PTM) downlink transmission based on the transmit diversity transmission mode. EP 4 280 505 Al anticipates an user equipment that may: determine slot timing values of a third set on the basis of slot timing values of a first set for a first DCI format and slot timing values of a second set for a second DCI format; determine valid time domain resource allocation values for each slot timing value in the slot timing values of the third set from among first time domain resource allocation values for the first DCI format and second time domain resource allocation values for the second DCI format; determine candidate PDSCH receptions on the basis of the slot timing values of the third set and the valid time domain resource allocation values; and transmit a HARQ-ACK codebook comprising HARQ-ACK information for the candidate PDSCH receptions.

### SUMMARY

Embodiments of this application aim to provide a method for generating a semi-static HARQ-ACK codebook, an apparatus for generating a semi-static HARQ-ACK codebook, a computer program product, and a readable storage medium as defined in the appended set of claims which can resolve a problem of how to determine the HARQ-ACK codebook in a case that UE supports simultaneous service transmission of two types of PDSCHs.

The embodiments of this application illustrate the method of determining a semi-static HARQ-ACK codebook in a case that the terminal supports simultaneous transmission of the first PDSCH and the second PDSCH, which can optimize the method of determining a semi-static HARQ-ACK codebook.

### BRIEF DESCRIPTION OF DRAWINGS

FIG. 1 is a block diagram of a wireless communications system to which the embodiments of this application are applicable;
FIG. 2 is a schematic flowchart of a method for generating a semi-static HARQ-ACK codebook according to an embodiment of this application;
FIG. 3 is a schematic structural diagram of an HARQ-ACK feedback window according to an embodiment of this application;
FIG. 4 is a schematic flowchart of a method for generating a semi-static HARQ-ACK codebook according to another embodiment of this application;
FIG. 5 is a schematic diagram of a TDRA table corresponding to a unicast PDSCH and a corresponding candidate PDSCH reception occasion according to an embodiment of this application;
FIG. 6 is a schematic diagram of a TDRA table corresponding to a multicast PDSCH and a corresponding candidate PDSCH reception occasion according to an embodiment of this application;
FIG. 7 is a schematic diagram of a union set of TDRA tables corresponding to unicast PDSCH and multicast PDSCHs and a corresponding candidate PDSCH reception occasion according to an embodiment of this application;
FIG. 8 is a schematic diagram of a method for determining a candidate PDSCH reception occasion in a slot corresponding to *K*_{1,*k*} = 7 according to an embodiment of this application;
FIG. 9 is a schematic diagram of a method for determining a candidate PDSCH reception occasion in a slot corresponding to *K*_{1,*k*} = 6 according to an embodiment of this application;
FIG. 10 is a schematic structural diagram of an apparatus for generating a semi-static HARQ-ACK codebook according to an embodiment of this application;
FIG. 11 is a schematic structural diagram of a terminal according to an embodiment of this application not covered by the claims; and
FIG. 12 is a schematic diagram of a hardware structure of a terminal according to an embodiment of this application not covered by the claims.

### DESCRIPTION OF EMBODIMENTS

The following clearly and completely describes the technical solutions in the embodiments of this application with reference to the accompanying drawings in the embodiments of this application. Apparently, the described embodiments are only some rather than all of the embodiments of this application.

In the specification and claims of this application, the terms such as "first" and "second" are intended to distinguish between similar objects but do not necessarily indicate a specific order or sequence. It should be understood that the terms used in this way are interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, in the specification and claims, "and/or" represents presence of at least one of connected objects, and the symbol "/" in this specification usually indicates an "or" relationship between associated objects.

It should be noted that techniques described in the embodiments of this application are not limited to a long term evolution (Long Term Evolution, LTE) or LTE-Advanced (LTE-Advanced, LTE-A) system, and may also be applied to various wireless communications systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the described technology not only can be used for the foregoing system and radio technologies, but also can be used for other systems and radio technologies. However, in the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communications system.

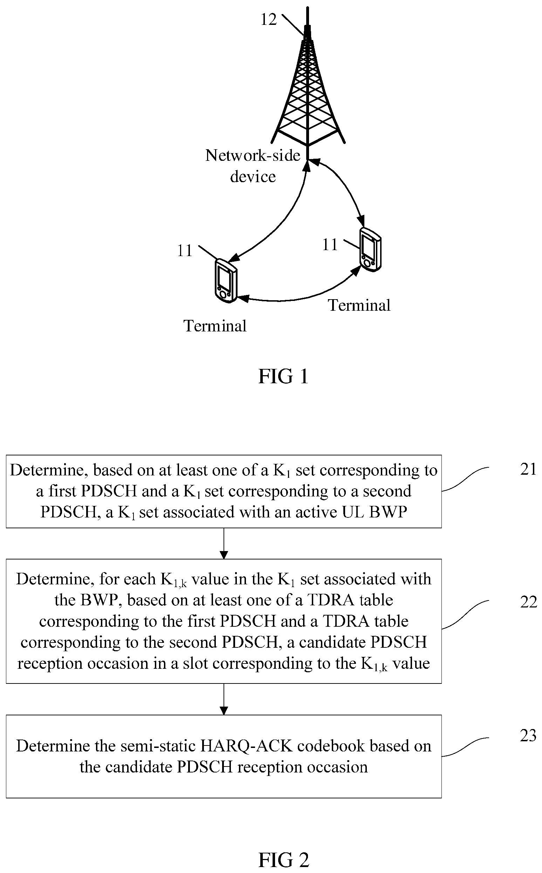

FIG. 1 is a block diagram of a wireless communication system to which the embodiments of this application are applicable. The wireless communications system includes a terminal 11 and a network-side device 12. The terminal 11 may also be referred to as a terminal device or user equipment (User Equipment, UE). The terminal 11 may be a terminal-side device, such as a mobile phone, a tablet personal computer (Tablet Personal Computer), a laptop computer (Laptop Computer) or notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), a wearable device (Wearable Device), vehicular user equipment (VUE), or pedestrian user equipment (PUE). The wearable device includes a wrist band, earphones, glasses, and the like. It should be noted that a specific type of terminal 11 is not limited in the embodiments of this application. The network-side device 12 may be a base station or a core network, where the base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a wireless local area network (Wireless Local Area Network, WLAN) access point, a Wireless Fidelity (Wireless Fidelity, WiFi) node, a transmission reception point (TRP), or another appropriate term in the art. As long as the same technical effect is achieved, the base station is not limited to a specific technical term. It should be noted that the base station in the NR system is taken only as an example in the embodiments of this disclosure, but is not used to limit a specific type of the base station.

The following specifically describes the method and terminal for generating a semi-static HARQ-ACK codebook provided in the embodiments of this application through specific embodiments and application scenarios thereof with reference to the accompanying drawings.

Referring to FIG. 2, FIG. 2 shows a method for generating a semi-static HARQ-ACK codebook according to an embodiment of this application. The method is performed by a terminal and includes the following steps:
Step 21: Determine, based on at least one of a *K*₁ set corresponding to a first PDSCH and a *K*₁ set corresponding to a second PDSCH, a *K*₁ set associated with an active UL BWP.

Step 22: Determine, for each *K*_{1,*k*} value in the *K*₁ set associated with the active UL BWP, based on at least one of a TDRA table corresponding to the first PDSCH and a TDRA table corresponding to the second PDSCH, a candidate PDSCH reception occasion in a slot corresponding to the *K*_{1,*k*} value, where k = 0, ..., M-1, and M is the quantity of elements in the *K*₁ set associated with the active UL BWP.

In this embodiment of this application, based on the *K*₁ set associated with the active UL BWP, an HARQ-ACK feedback window can be determined. That is, for a specific UL slot, a PDSCH or PDCCH that needs to be fed back (for example, a PDCCH indicating SPS PDSCH release or a PDCCH indicating Scell dormancy) can only be transmitted in a slot within the HARQ-ACK feedback window. In other words, in the UL slot, only the PDSCH or PDCCH transmitted within the HARQ-ACK feedback window needs to be fed back.

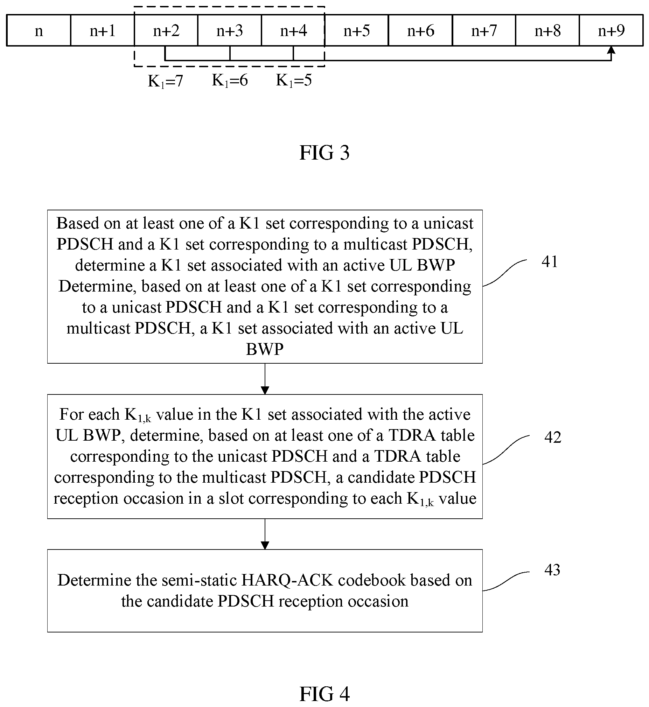

Referring to FIG. 3, assuming that the *K*₁ set associated with the active UL BWP is {5, 6, 7}, an HARQ-ACK feedback window corresponding to a slot of n+9 is: n+4 to n+2, where an offset value *K*_{1,*k*} of n+2 and n+9 is 7, an offset value *K*_{1,*k*} of n+3 and n+9 is 6, and an offset value *K*_{1,*k*} of n+4 and n+9 is 5.

Step 23: Determine the semi-static HARQ-ACK codebook based on the candidate PDSCH reception occasion.

This embodiment of this application illustrates the method of determining a semi-static HARQ-ACK codebook in a case that the terminal supports simultaneous transmission of the first PDSCH and the second PDSCH, which can optimize the method of determining a semi-static HARQ-ACK codebook.

In this embodiment of this application, optionally, based on at least one of a *K*₁ set corresponding to a first PDSCH and a *K*₁ set corresponding to a second PDSCH, determining a *K*₁ set associated with an active UL BWP includes one of the following:
(1) using the *K*₁ set corresponding to the first PDSCH as the *K*₁ set associated with the active UL BWP.
   Optionally, the *K*₁ set corresponding to the second PDSCH is a subset of the *K*₁ set corresponding to the first PDSCH.
(2) using the *K*₁ set corresponding to the second PDSCH as the *K*₁ set associated with the active UL BWP.
   Optionally, the *K*₁ set corresponding to the first PDSCH is a subset of the *K*₁ set corresponding to the second PDSCH.
(3) using a union set of the *K*₁ set corresponding to the first PDSCH and the *K*₁ set corresponding to the second PDSCH as the *K*₁ set associated with the active UL BWP.

This embodiment of this application illustrates the method for determining the *K*₁ set associated with the active UL BWP in a case that the terminal supports simultaneous transmission of the first PDSCH and the second PDSCH.

In this embodiment of this application, the determining, based on at least one of a TDRA table corresponding to the first PDSCH and a TDRA table corresponding to the second PDSCH, a candidate PDSCH reception occasion in a slot corresponding to the *K*_{1,*k*} value includes:
in a case that the *K*_{1,*k*} value belongs to an intersection set of the *K*₁ set corresponding to the first PDSCH and the *K*₁ set corresponding to the second PDSCH, determining, based on a union set of a row index of the TDRA table corresponding to the first PDSCH and a row index of the TDRA table corresponding to the second PDSCH, the candidate PDSCH reception occasion in the slot corresponding to the *K*_{1,*k*} value; and
in a case that the *K*_{1,*k*} value does not belong to the intersection set, determining, based on the row index of the TDRA table corresponding to the first PDSCH or the row index of the TDRA table corresponding to the second PDSCH, the candidate PDSCH reception occasion in the slot corresponding to the *K*_{1,*k*} value.

In this embodiment of this application, the union set of the TDRA table corresponding to the first PDSCH and the TDRA table corresponding to the second PDSCH is used to determine the candidate PDSCH reception occasion in the slot corresponding to the *K*_{1,*k*} value only in a case the *K*_{1,*k*} value in *K*₁ set associated with the active UL BWP belongs to the intersection set of the *K*₁ set corresponding to the first PDSCH and the *K*₁ set corresponding to the second PDSCH; and in a case that the *K*_{1,*k*} value does not belong to the intersection set, only the TDRA table corresponding to the first PDSCH or the TDRA table corresponding to the second PDSCH is used to determine the candidate PDSCH reception occasion in the slot corresponding to the *K*_{1,*k*} value, which can effectively reduce the size of the semi-static HARQ-ACK codebook.

In this embodiment of this application, optionally, in a case that the *K*_{1,*k*} value does not belong to the intersection set, based on the row index of the TDRA table corresponding to the first PDSCH or the row index of the TDRA table corresponding to the second PDSCH, the determining the candidate PDSCH reception occasion in the slot corresponding to the *K*_{1,*k*} value includes at least one of the following:
in a case that the *K*_{1,*k*} value belongs to the *K*₁ set corresponding to the first PDSCH, determining, based on the row index of the TDRA table corresponding to the first PDSCH, the candidate PDSCH reception occasion in the slot corresponding to the *K*_{1,*k*} value; and
in a case that the *K*_{1,*k*} value belongs to the *K*₁ set corresponding to the second PDSCH, determining, based on the row index of the TDRA table corresponding to the second PDSCH, the candidate PDSCH reception occasion in the slot corresponding to the *K*_{1,*k*} value.

In this embodiment of this application, in a case that a sub-slot (sub-slot) such as subslotLengthForPUCCH is configured for the UE, the slot in the foregoing embodiment can be replaced with the sub-slot to determine, for example, a candidate PDSCH reception occasion in the sub-slot corresponding to the *K*_{1,*k*} value.

In the foregoing embodiment of this application, optionally, the first PDSCH and the second PDSCH correspond to different TDRA tables and/or *K*₁ sets.

In this embodiment of this application, the first PDSCH is a unicast PDSCH, and the second PDSCH is a multicast PDSCH.

It should be noted that in the present invention, the first PDSCH and the second PDSCH respectively represent two different types of PDSCHs, for example, the multicast PDSCH and the unicast PDSCH, or a PDSCH with a high priority and a PDSCH with a low priority. The terminal can determine the first PDSCH or the second PDSCH through a format of the DCI for scheduling the PDSCH, a control resource set (CORESET) to which the DCI belongs, a search space in which the DCI is located, or a scrambling RNTI of the PDSCH; or an RNTI for scrambling the CRC of the DCI for scheduling the PDSCH. This is not specifically limited in the present invention.

Currently, a broadcast or multicast feature is introduced to the new radio (New Radio, NR) technology. Broadcast and multicast services are mainly transmitted through the multicast PDSCH (also referred to as the broadcast PDSCH or a group-common PDSCH). The UE can receive the multicast PDSCH and the unicast PDSCH simultaneously, and TDRA tables and/or *K*₁ sets of the multicast PDSCH and the unicast PDSCH can be configured individually. When the UE supports simultaneous transmission of the unicast PDSCH and the multicast PDSCH, in a case that the candidate PDSCH reception occasion is determined directly based on the union set of the TDRA of the unicast PDSCH and the TDRA table of the multicast PDSCH, the size of the HARQ-ACK codebook is unnecessarily increased. Therefore, in a case that the UE supports the simultaneous transmission of the unicast PDSCH and the multicast PDSCH, the semi-static HARQ-ACK codebook can be determined in the method for generating a semi-static HARQ-ACK codebook described in the foregoing embodiment of this application, to optimize the method for determining the semi-static HARQ-ACK codebook. It should be noted that supporting the simultaneous transmission of the unicast PDSCH and the multicast PDSCH herein means supporting transmission of two types of services. Within a period of time, the UE can receive both the unicast PDSCH and the multicast PDSCH, which does not mean transmission of the unicast PDSCH and the multicast PDSCH on overlapped time domain symbols.

An example that the first PDSCH is a unicast PDSCH and the second PDSCH is a multicast PDSCH is provided below to describe the method for generating a semi-static HARQ-ACK codebook in this embodiment of this application.

Referring to FIG. 4, a method for generating a semi-static HARQ-ACK codebook in this embodiment of this application includes the following steps:

Step 41: Determine, based on at least one of a *K*₁ set corresponding to a unicast PDSCH and a *K*₁ set corresponding to a multicast PDSCH, a *K*₁ set associated with an active UL BWP.

Optionally, the determining a *K*₁ set associated with an active UL BWP includes one of the following:
(1) using the *K*₁ set corresponding to the unicast PDSCH as the *K*₁ set associated with the active UL BWP.
   Optionally, the *K*₁ set corresponding to the multicast is a subset of the *K*₁ set corresponding to unicast PDSCH.
(2) using the *K*₁ set corresponding to the multicast PDSCH as the *K*₁ set associated with the active UL BWP.
   Optionally, the *K*₁ set corresponding to the unicast is a subset of the *K*₁ set corresponding to the multicast PDSCH.
(3) using a union set of the *K*₁ set corresponding to the unicast and the *K*₁ set corresponding to the multicast PDSCH as the *K*₁ set associated with the active UL BWP.

It is assumed that the *K*₁ set corresponding to the unicast PDSCH is {1, 2, 3, 4, 5, 6, 7, 8}, and the *K*₁ set corresponding to the multicast PDSCH is {6, 8, 10}.

In this embodiment of this application, in a case that the *K*₁ set corresponding to the unicast PDSCH is used as the *K*₁ set associated with the active UL BWP, the *K*₁ set associated with the active UL BWP is {1, 2, 3, 4, 5, 6, 7, 8}.

In a case that the *K*₁ set corresponding to the multicast PDSCH is used as the *K*₁ set associated with the active UL BWP, the *K*₁ set associated with the active UL BWP is {6, 8, 10}.

In a case that the union set of the *K*₁ set corresponding to the unicast and the *K*₁ set corresponding to the multicast PDSCH is used as the *K*₁ set associated with the active UL BWP, the *K*₁ set associated with the active UL BWP is {1, 2, 3, 4, 5, 6, 7, 8, 10}.

Step 42: For each *K*_{1,*k*} value in the *K*₁ set associated with the active UL BWP, determine, based on at least one of a TDRA table corresponding to the unicast PDSCH and a TDRA table corresponding to the multicast PDSCH, a candidate PDSCH reception occasion in a slot corresponding to each *K*_{1,*k*} value, where k = 0, ..., M-1, and M is the quantity of elements in the *K*₁ set associated with the active UL BWP.

In a case that the *K*_{1,*k*} value belongs to an intersection set of the *K*₁ set corresponding to the unicast and the *K*₁ set corresponding to the multicast PDSCH, determine, based on a union set of the TDRA table corresponding to the unicast PDSCH and the TDRA table corresponding to the multicast PDSCH, the candidate PDSCH reception occasion in the slot corresponding to the *K*_{1,*k*} value;
in a case that the *K*_{1,*k*} value only belongs to the *K*₁ set corresponding to the unicast PDSCH and does not belong to the intersection set of the *K*₁ set corresponding to the unicast and the *K*₁ set corresponding to the multicast PDSCH, determine, based on the TDRA table corresponding to the unicast PDSCH, the candidate PDSCH reception occasion in the slot corresponding to the *K*_{1,*k*} value; and
in a case that the *K*_{1,*k*} value only belongs to the *K*₁ set corresponding to the multicast PDSCH and does not belong to the intersection set of the *K*₁ set corresponding to the unicast and the *K*₁ set corresponding to the multicast PDSCH, determine, based on the TDRA table corresponding to the multicast PDSCH, the candidate PDSCH reception occasion in the slot corresponding to the *K*_{1,*k*} value.

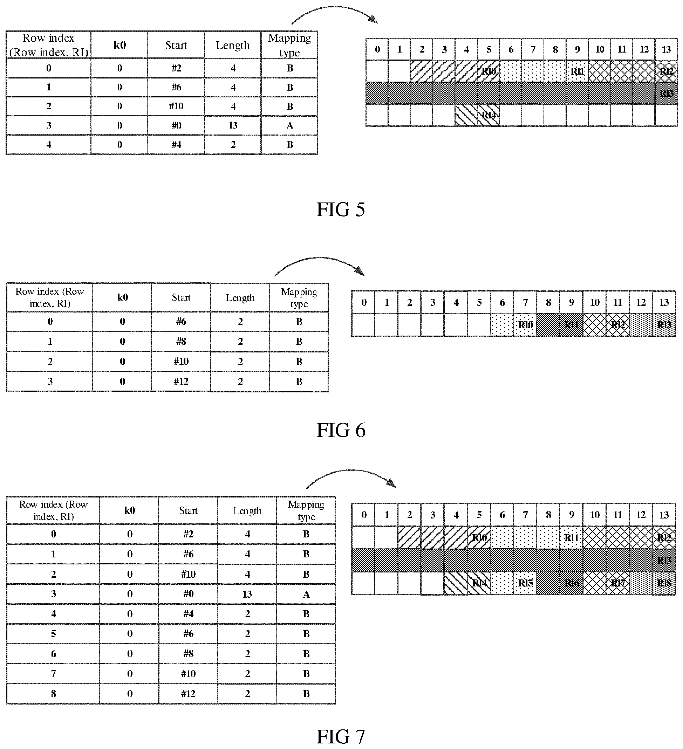

Referring to FIG. 5, FIG. 5 is a schematic diagram of a TDRA table corresponding to a unicast PDSCH and a corresponding candidate PDSCH reception occasion according to an embodiment of this application. Referring to FIG. 6, FIG. 6 is a schematic diagram of a TDRA table corresponding to a multicast PDSCH and a corresponding candidate PDSCH reception occasion according to an embodiment of this application.

It is assumed that the *K*₁ set that is associated with the active UL BWP determined in Step 41 is {1, 2, 3, 4, 5, 6, 7, 8, 10}.

In a case that the *K*_{1,*k*} value is 6 or 8, the value belongs to an intersection set {6, 8} of the *K*₁ set corresponding to the unicast PDSCH and the *K*₁ set corresponding to the multicast PDSCH. Based on the union set of the TDRA table corresponding to the unicast PDSCH and the TDRA table corresponding to the multicast PDSCH, the terminal determines the candidate PDSCH reception occasion in the slot corresponding to the *K*_{1,*k*} value. Referring to FIG. 7, FIG. 7 is a schematic diagram of a union set of TDRA tables corresponding to unicast and multicast PDSCHs and a corresponding candidate PDSCH reception occasion according to an embodiment of this application.

In a case that the *K*_{1,*k*} value belongs to {1, 2, 3, 4, 5, 7}, the value only belongs to the *K*₁ set corresponding to the unicast PDSCH. Based on the TDRA table corresponding to the unicast PDSCH, the terminal determines the candidate PDSCH reception occasion in the slot corresponding to the *K*_{1,*k*} value.

In a case that the *K*_{1,*k*} value is 10, the value only belongs to the *K*₁ set corresponding to the multicast PDSCH. Based on the TDRA table corresponding to the multicast PDSCH, the terminal determines the candidate PDSCH reception occasion in the slot corresponding to the *K*_{1,*k*} value.

Step 43: Determine the semi-static HARQ-ACK codebook based on the candidate PDSCH reception occasion.

In the foregoing embodiment of this application, optionally, the determining a candidate PDSCH reception occasion in a slot corresponding to each *K*_{1,*k*} value further includes at least one of the following:
(1) excluding a candidate PDSCH reception occasion that is in the TDRA table and that is overlapped with an uplink symbol.

That is, after being compared with uplink and downlink slot format configurations of time division duplexing (Time Division Duplexing, TDD), a position of the candidate PDSCH reception occasion is determined to be valid. When a candidate PDSCH receiving position in a specific row of the TDRA is overlapped with the uplink symbol, the position of the candidate PDSCH reception occasion in this row is not a valid reception occasion and needs to be excluded.

Optionally, the uplink symbol is semi-statically configured, for example, uplink symbols configured via parameters TDD-UL-DL-ConfigurationCommon and TDD-UL-DL-ConfigDedicated.

(2) combining candidate PDSCH reception occasions overlapped on time-domain positions, to generate, for example, only 1 HARQ-ACK bit. That is, based on a TDRA table associated with a downlink BWP, rows with non-overlapped time-domain resources are obtained, and only one of overlapped rows is considered.

For example, it is assumed that the *K*₁ set associated with the active UL BWP is {5, 6, 7}. It is also assumed that in a downlink (Downlink, DL) slot corresponding to each *K*_{1,*k*}, each row of the TDRA table of the PDSCH for determining the HARQ-ACK codebook is shown in FIG. 7.

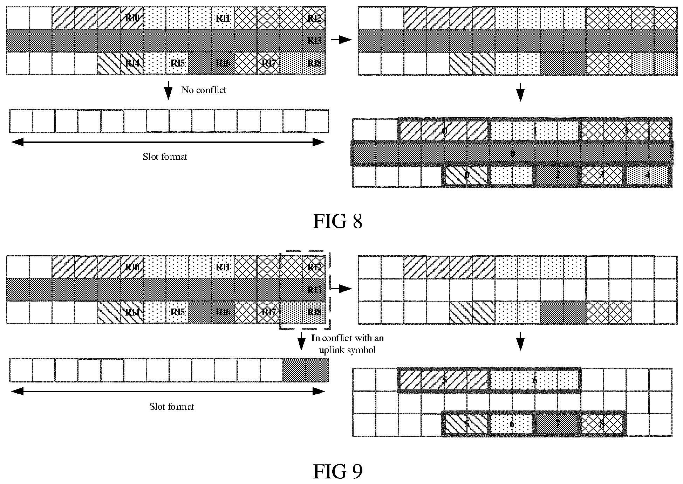

When *K*_{1,*k*} = 7, referring to FIG. 8, assuming that all candidate PDSCH reception occasions do not conflict with the uplink symbol, all the candidate PDSCH reception occasions can be retained.

When *K*_{1,*k*} = 6, referring to FIG. 9, assuming that PDSCH candidate positions in rows 2, 3, and 8 are overlapped with the uplink symbol, the PDSCH candidate positions are excluded.

When *K*_{1,*k*} = 5, assuming that all sets of candidate PDSCH reception occasions are overlapped with the uplink symbol, all the sets of candidate PDSCH reception occasions are excluded.

Therefore, a finally determined set of candidate PDSCH reception occasions is: MA,c={0,1,2,3,4,5,6,7,8}.

After the candidate PDSCH reception occasion is determined, the HARQ-ACK information also needs to be determined. The HARQ-ACK information can be determined in the following manner:
in a case that the determined set of candidate PDSCH reception occasions includes no scheduled PDSCH reception, the UE feeds back the NACK;
in a case that the determined set of candidate PDSCH reception occasions includes no PDSCH reception indicated to be fed back in a current slot, the UE feeds back the NACK; and
in a case that feedback windows of the PDSCHs are overlapped, the PDSCHs are fed back at positions indicated by a DCI format 1-0 or a DCI format 1-1, and the NACK is fed back at another position; and
for the set of candidate PDSCH reception occasions with ACK/NACK feedback, based on an obtained candidate PDSCH set of each cell, the number of cells configured by RRC, an HARQ spatial bundling parameter, a code block group (CBG) configuration parameter, and the maximum codeword parameter supported by each cell jointly, the HARQ-ACK codebook is determined.

It should be noted that, the method for generating a semi-static HARQ-ACK codebook provided in this embodiment of this application may be executed by an apparatus for generating a semi-static HARQ-ACK codebook, or a control module for generating a semi-static HARQ-ACK codebook in the apparatus for generating a semi-static HARQ-ACK codebook. In this embodiment of this application, performing the method for generating a semi-static HARQ-ACK codebook by using the apparatus for generating a semi-static HARQ-ACK codebook is used as an example to illustrate the apparatus for generating a semi-static HARQ-ACK codebook provided in this embodiment of this application.

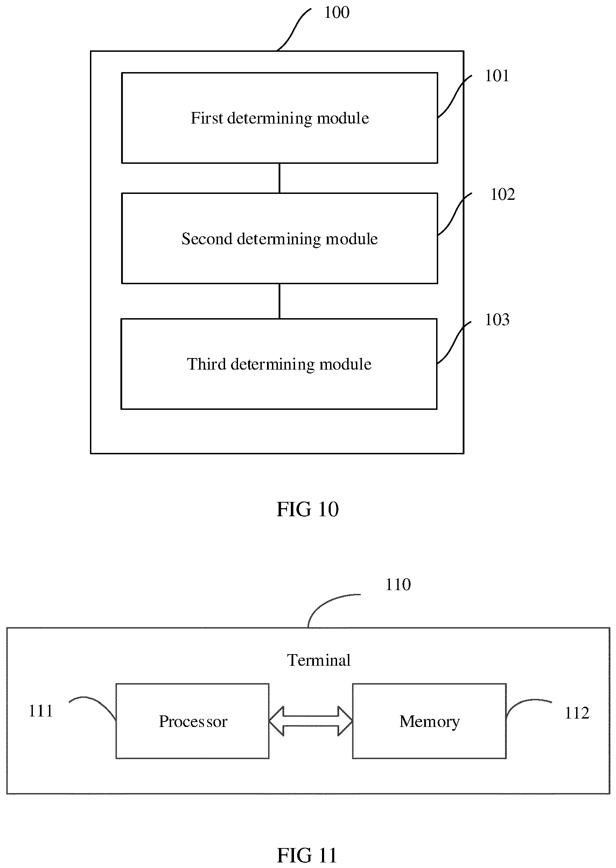

Referring to FIG. 10, an embodiment of this application further provides an apparatus 100 for generating a semi-static HARQ-ACK codebook, including:
a first determining module 101, configured to: determine, based on at least one of a *K*₁ set corresponding to a first PDSCH and a *K*₁ set corresponding to a second PDSCH, a *K*₁ set associated with an active UL BWP;
a second determining module 102, configured to: for each *K*_{1,*k*} value in the *K*₁ set associated with the active UL BWP, determine, based on at least one of a TDRA table corresponding to the first PDSCH and a TDRA table corresponding to the second PDSCH, a candidate PDSCH reception occasion in a slot corresponding to the *K*_{1,*k*} value, where k = 0, ..., M-1, and M is the quantity of elements in the *K*₁ set associated with the active UL BWP; and
a third determining module 103, configured to determine the semi-static HARQ-ACK codebook based on the candidate PDSCH reception occasion.

This embodiment of this application illustrates the method of determining a semi-static HARQ-ACK codebook in a case that the terminal supports simultaneous transmission of the first PDSCH and the second PDSCH, which can optimize the method of determining a semi-static HARQ-ACK codebook.

Optionally, the first determining module 101 performs one of the following:
using the *K*₁ set corresponding to the first PDSCH as the *K*₁ set associated with the active UL BWP;
using the *K*₁ set corresponding to the second PDSCH as the *K*₁ set associated with the active UL BWP; and
using a union set of the *K*₁ set corresponding to the first PDSCH and the *K*₁ set corresponding to the second PDSCH as the *K*₁ set associated with the active UL BWP.

The second determining module 102 is configured to perform:
in a case that the *K*_{1,*k*} value belongs to an intersection set of the *K*₁ set corresponding to the first PDSCH and the *K*₁ set corresponding to the second PDSCH, determining, based on a union set of a row index of the TDRA table corresponding to the first PDSCH and a row index of the TDRA table corresponding to the second PDSCH, the candidate PDSCH reception occasion in the slot corresponding to the *K*_{1,*k*} value; and
in a case that the *K*_{1,*k*} value does not belong to the intersection set, determining, based on the row index of the TDRA table corresponding to the first PDSCH or the row index of the TDRA table corresponding to the second PDSCH, the candidate PDSCH reception occasion in the slot corresponding to the *K*_{1,*k*} value.

Optionally, the second determining module 102 is configured to perform at least one of the following:
in a case that the *K*_{1,*k*} value belongs to the *K*₁ set corresponding to the first PDSCH, determining, based on the row index of the TDRA table corresponding to the first PDSCH, the candidate PDSCH reception occasion in the slot corresponding to the *K*_{1,*k*} value; and
in a case that the *K*_{1,*k*} value belongs to the *K*₁ set corresponding to the second PDSCH, determining, based on the row index of the TDRA table corresponding to the second PDSCH, the candidate PDSCH reception occasion in the slot corresponding to the *K*_{1,*k*} value.

Optionally, the first PDSCH and the second PDSCH correspond to different TDRA tables and/or *K*₁ sets.

The first PDSCH is a unicast PDSCH, and the second PDSCH is a multicast PDSCH.

The apparatus for generating a semi-static HARQ-ACK codebook in this embodiment of this application may be an apparatus or a component, an integrated circuit, or a chip in a terminal. The apparatus may be a mobile terminal or a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (television, TV), a teller machine, a self-service machine or the like, which are not specifically limited in the embodiments of this application.

The apparatus for generating a semi-static HARQ-ACK codebook in this embodiment of this application may be an apparatus having an operating system. The operating system may be an android (Android) operating system, may be an iOS operating system, or may be another possible operating system. This is not specifically limited in the embodiments of this application.

The apparatus for generating a semi-static HARQ-ACK codebook provided in this embodiment of this application can implement each process implemented in the method embodiments in FIG. 2 to FIG. 8, and achieve the same technical effects. To avoid repetition, details are not described herein again.

As shown in FIG. 11, an embodiment of this application further provides a terminal 110, including a processor 111, a memory 112, and a program or instructions stored in the memory 112 and capable of running on the processor 111, where when the program or instructions are executed by the processor 111, the processes of the foregoing embodiment of the method for generating a semi-static HARQ-ACK codebook are implemented, with the same technical effects achieved. To avoid repetition, details are not further described herein.

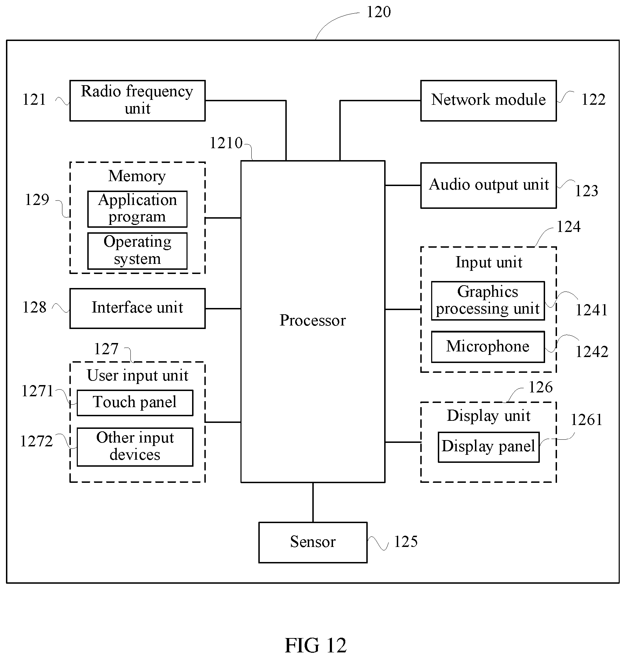

FIG. 12 is a schematic diagram of a hardware structure of a terminal implementing an embodiment of this application. The terminal 120 includes but is not limited to components such as a radio frequency unit 121, a network module 122, an audio output unit 123, an input unit 124, a sensor 125, a display unit 126, a user input unit 127, an interface unit 128, a memory 129, and a processor 1210.

It can be understood by those skilled in the art that the terminal 120 may further include a power supply (for example, a battery) supplying power to the components. The power supply may be logically connected to the processor 1210 via a power management system, so that functions such as charge management, discharge management, and power consumption management are implemented by using the power management system. The structure of the terminal shown in FIG. 12 does not constitute any limitation on the terminal, and the terminal may include more or fewer components than shown in the figure, or combine some of the components, or have different arrangements of the components. Details are not described herein.

It should be understood that in this embodiment of this application, the input unit 124 may include a graphics processing unit (Graphics Processing Unit, GPU) 1241 and a microphone 1242. The graphics processing unit 1241 processes image data of a static picture or a video that is obtained by an image capture apparatus (for example, a camera) in a video capture mode or an image capture mode. The display unit 126 may include a display panel 1261. The display panel 1261 may be configured in a form of a liquid crystal display, an organic light-emitting diode display, or the like. The user input unit 127 includes a touch panel 1271 and other input devices 1272. The touch panel 1271 is also referred to as a touchscreen. The touch panel 1271 may include two parts: a touch detection apparatus and a touch controller. The other input devices 1272 may include but are not limited to a physical keyboard, a functional button (such as a volume control button or a power on/off button), a trackball, a mouse, and a joystick. Details are not described herein.

In this embodiment of this application, the radio frequency unit 121 transmits downlink data received from a network-side device to the processor 1210 for processing, and in addition, transmits uplink data to the network-side device. Generally, the radio frequency unit 121 includes but is not limited to an antenna, at least one amplifier, a transceiver, a coupler, a low noise amplifier, a duplexer, and the like.

The memory 129 may be configured to store software programs or instructions and various data. The memory 129 may include a program or instruction storage area and a data storage area. The program or instruction storage area may store an operating system, an application program or instructions required by at least one function (for example, a sound playback function or an image playback function), and the like. Further, the memory 129 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, flash memory device, or other volatile solid-state storage device.

The processor 1210 may include one or more processing units. Optionally, an application processor and a modem processor may be integrated in the processor 1210. The application processor primarily processes an operating system, user interfaces, application programs or instructions, and the like. The modem processor primarily processes radio communication, for example, being a baseband processor. It may be understood that the modem processor may alternatively not be integrated into the processor 1210.

The processor 1210 is configured to: determine, based on at least one of a *K*₁ set corresponding to a first PDSCH and a *K*₁ set corresponding to a second PDSCH, a *K*₁ set associated with an active UL BWP; determine, for each *K*_{1,*k*} value in the *K*₁ set associated with the active UL BWP, based on at least one of a row index of a TDRA table corresponding to the first PDSCH and a TDRA table corresponding to the second PDSCH, a candidate PDSCH reception occasion in a slot corresponding to the *K*_{1,*k*} value; and determine, based on the candidate PDSCH reception occasion, the semi-static HARQ-ACK codebook, where k = 0, ..., M-1, and M is the quantity of elements in the *K*₁ set associated with the active UL BWP.

This embodiment of this application illustrates the method of determining a semi-static HARQ-ACK codebook in a case that the terminal supports simultaneous transmission of the first PDSCH and the second PDSCH, which can optimize the method of determining a semi-static HARQ-ACK codebook.

Optionally, the processor 1210 is further configured to perform one of the following:
using the *K*₁ set corresponding to the first PDSCH as the *K*₁ set associated with the active UL BWP;
using the *K*₁ set corresponding to the second PDSCH as the *K*₁ set associated with the active UL BWP; and
using a union set of the *K*₁ set corresponding to the first PDSCH and the *K*₁ set corresponding to the second PDSCH as the *K*₁ set associated with the active UL BWP.

The processor 1210 is further configured to perform the following:
in a case that the *K*_{1,*k*} value belongs to an intersection set of the *K*₁ set corresponding to the first PDSCH and the *K*₁ set corresponding to the second PDSCH, determining, based on a union set of a row index of the TDRA table corresponding to the first PDSCH and a row index of the TDRA table corresponding to the second PDSCH, the candidate PDSCH reception occasion in the slot corresponding to the *K*_{1,*k*} value; and
in a case that the *K*_{1,*k*} value does not belong to the intersection set, determining, based on the row index of the TDRA table corresponding to the first PDSCH or the row index of the TDRA table corresponding to the second PDSCH, the candidate PDSCH reception occasion in the slot corresponding to the *K*_{1,*k*} value.

Optionally, the processor 1210 is further configured to perform at least one of the following:
in a case that the *K*_{1,*k*} value belongs to the *K*₁ set corresponding to the first PDSCH, determining, based on the row index of the TDRA table corresponding to the first PDSCH, the candidate PDSCH reception occasion in the slot corresponding to the *K*_{1,*k*} value; and
in a case that the *K*_{1,*k*} value belongs to the *K*₁ set corresponding to the second PDSCH, determining, based on the row index of the TDRA table corresponding to the second PDSCH, the candidate PDSCH reception occasion in the slot corresponding to the *K*_{1,*k*} value.

Optionally, the first PDSCH and the second PDSCH correspond to different TDRA tables and/or *K*₁ sets.

The first PDSCH is a unicast PDSCH, and the second PDSCH is a multicast PDSCH.

An embodiment of this application further provides a readable storage medium, where the readable storage medium stores a program or instructions, and when the program or instructions are executed by a processor, the processes of the foregoing embodiments of the method for generating a semi-static HARQ-ACK codebook are implemented, with the same technical effects achieved. To avoid repetition, details are not described herein again.

The processor is a processor in the terminal described in the foregoing embodiment. The readable storage medium includes a computer-readable storage medium, for example, a computer read-only memory (Read-Only Memory, ROM), a random access memory (Random Access Memory, RAM), a magnetic disk, or an optical disc.

Another embodiment of this application provides a chip, where the chip includes a processor and a communications interface, the communications interface is coupled to the processor, and the processor is configured to run a program or instructions of the network-side device to implement the processes of the foregoing embodiments of the method for generating a semi-static HARQ-ACK codebook, with the same technical effects achieved. To avoid repetition, details are not described herein again.

It should be understood that the chip mentioned in this embodiment of this application may also be referred to as a system-level chip, a system chip, a chip system, a system-on-chip, or the like.

An embodiment of this application further provides a program product, in particular, a computer program product, where the program product is stored in a non-volatile storage medium, and the program product is executed by at least one processor, to implement processes of the foregoing embodiments of the method for generating a semi-static HARQ-ACK codebook, with the same technical effects achieved. To avoid repetition, details are not described herein again.

An embodiment of this application provides a terminal device, configured to perform the processes of embodiments of the foregoing methods, with the same technical effects achieved. To avoid repetition, details are not described herein again.

It should be noted that in this specification, the term "comprise", "include", or any other variant thereof is intended to cover a non-exclusive inclusion, so that a process, a method, an article, or an apparatus that includes a list of elements not only includes those elements but also includes other elements that are not expressly listed, or further includes elements inherent to such process, method, article, or apparatus. Without more constraints, an element preceded by "includes a..." does not preclude the presence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially, or the part contributing to the prior art may be implemented in a form of a software product. The software product is stored in a storage medium (for example, ROM/RAM, a magnetic disk, or an optical disc), and includes several instructions for instructing a terminal (which may be a mobile phone, a computer, a server, an air conditioner, a network device, or the like) to perform the method described in the embodiments of this application.

The foregoing describes the embodiments of this application with reference to the accompanying drawings. However, this application is not limited to the foregoing specific implementations. These specific implementations are merely illustrative rather than restrictive.

## Claims

1. A method for generating a semi-static hybrid automatic repeat request acknowledgment, HARQ-ACK, codebook, the method performed by a terminal (100) and comprising:
determining (21), based on at least one of a *K*₁ set corresponding to a first physical downlink shared channel, PDSCH, and a *K*₁ set corresponding to a second PDSCH, a *K*₁ set associated with an active uplink bandwidth part, UL BWP;
determining (22), for each *K*_{1,*k*} value in the *K*₁ set associated with the active UL BWP, based on at least one of a time domain resource assignment, TDRA, table corresponding to the first PDSCH and a TDRA table corresponding to the second PDSCH, a candidate PDSCH reception occasion in a slot corresponding to the *K*_{1,*k*} value, wherein k = 0, ..., M-1, and M is a quantity of elements in the *K*₁ set associated with the active UL BWP; and
determining (23) the semi-static HARQ-ACK codebook based on the candidate PDSCH reception occasion;
wherein the determining (22), based on at least one of a TDRA table corresponding to the first PDSCH and a TDRA table corresponding to the second PDSCH, a candidate PDSCH reception occasion in a slot corresponding to the *K*_{1,*k*} value comprises:
in a case that the *K*_{1,*k*} value belongs to an intersection set of the *K*₁ set corresponding to the first PDSCH and the *K*₁ set corresponding to the second PDSCH, determining, based on a union set of a row index of the TDRA table corresponding to the first PDSCH and a row index of the TDRA table corresponding to the second PDSCH, the candidate PDSCH reception occasion in the slot corresponding to the *K*_{1,*k*} value; and
in a case that the *K*_{1,*k*} value does not belong to the intersection set, determining, based on the row index of the TDRA table corresponding to the first PDSCH or the row index of the TDRA table corresponding to the second PDSCH, the candidate PDSCH reception occasion in the slot corresponding to the *K*_{1,*k*} value,
wherein the first PDSCH is a unicast PDSCH, and the second PDSCH is a multicast PDSCH.

2. The method according to claim 1, wherein in a case that the *K*_{1,*k*} value does not belong to the intersection set, the determining, based on the row index of the TDRA table corresponding to the first PDSCH or the row index of the TDRA table corresponding to the second PDSCH, the candidate PDSCH reception occasion in the slot corresponding to the *K*_{1,*k*} value comprises at least one of the following:
in a case that the *K*_{1,*k*} value belongs to the *K*₁ set corresponding to the first PDSCH, determining, based on the row index of the TDRA table corresponding to the first PDSCH, the candidate PDSCH reception occasion in the slot corresponding to the *K*_{1,*k*} value; and
in a case that the *K*_{1,*k*} value belongs to the *K*₁ set corresponding to the second PDSCH, determining, based on the row index of the TDRA table corresponding to the second PDSCH, the candidate PDSCH reception occasion in the slot corresponding to the *K*_{1,*k*} value.

3. The method according to any one of claims 1 to 2, wherein the first PDSCH and the second PDSCH correspond to different DCI formats.

4. The method according to claim 1, wherein the determining (21), based on at least one of a *K*₁ set corresponding to a first PDSCH and a *K*₁ set corresponding to a second PDSCH, a *K*₁ set associated with an active UL BWP comprises one of the following:
using a union set of the *K*₁ set corresponding to the first PDSCH and the *K*₁ set corresponding to the second PDSCH as the *K*₁ set associated with the active UL BWP;
using the *K*₁ set corresponding to the first PDSCH as the *K*₁ set associated with the active UL BWP; and
using the *K*₁ set corresponding to the second PDSCH as the *K*₁ set associated with the active UL BWP.

5. The method according to any one of claims 1 to 4, wherein the first PDSCH and the second PDSCH correspond to different TDRA tables and/or *K*₁ sets.

6. An apparatus (100) for generating a semi-static hybrid automatic repeat request acknowledgment, HARQ-ACK, codebook, comprising:
a first determining module (101), configured to: based on at least one of a *K*₁ set corresponding to a first physical downlink shared channel, PDSCH, and a *K*₁ set corresponding to a second PDSCH, determine a *K*₁ set associated with an active uplink bandwidth part, UL BWP;
a second determining module (102), configured to: for each *K*_{1,*k*} value in the *K*₁ set associated with the active UL BWP, based on at least one of a time domain resource assignment, TDRA, table corresponding to the first PDSCH and a TDRA table corresponding to the second PDSCH, determine a candidate PDSCH reception occasion in a slot corresponding to the *K*_{1,*k*} value, wherein k = 0, ..., M-1, and M is the quantity of elements in the *K*₁ set associated with the active UL BWP; and
a third determining module (103), configured to determine the semi-static HARQ-ACK codebook based on the candidate PDSCH reception occasion;
wherein the second determining module (102) is configured to perform:
in a case that the *K*_{1,*k*} value belongs to an intersection set of the *K*₁ set corresponding to the first PDSCH and the *K*₁ set corresponding to the second PDSCH, determining, based on a union set of a row index of the TDRA table corresponding to the first PDSCH and a row index of the TDRA table corresponding to the second PDSCH, the candidate PDSCH reception occasion in the slot corresponding to the *K*_{1,*k*} value; and
in a case that the *K*_{1,*k*} value does not belong to the intersection set, determining, based on the row index of the TDRA table corresponding to the first PDSCH or the row index of the TDRA table corresponding to the second PDSCH, the candidate PDSCH reception occasion in the slot corresponding to the *K*_{1,*k*} value,
wherein the first PDSCH is a unicast PDSCH, and the second PDSCH is a multicast PDSCH.

7. The apparatus (100) according to claim 6, wherein the first determining module (101) is configured to perform one of the following:
using a union set of the *K*₁ set corresponding to the first PDSCH and the *K*₁ set corresponding to the second PDSCH as the *K*₁ set associated with the active UL BWP;
using the *K*₁ set corresponding to the first PDSCH as the *K*₁ set associated with the active UL BWP; and
using the *K*₁ set corresponding to the second PDSCH as the *K*₁ set associated with the active UL BWP.

8. The apparatus (100) according to claim 6, wherein the second determining module (102) is configured to perform at least one of the following:
in a case that the *K*_{1,*k*} value belongs to the *K*₁ set corresponding to the first PDSCH, determining, based on the row index of the TDRA table corresponding to the first PDSCH, the candidate PDSCH reception occasion in the slot corresponding to the *K*_{1,*k*} value; and
in a case that the *K*_{1,*k*} value belongs to the *K*₁ set corresponding to the second PDSCH, determining, based on the row index of the TDRA table corresponding to the second PDSCH, the candidate PDSCH reception occasion in the slot corresponding to the *K*_{1,*k*} value.

9. The apparatus (100) according to any one of claims 6 to 8, wherein the first PDSCH and the second PDSCH correspond to different DCI formats.

10. A computer program product, stored in a non-volatile computer readable storage medium, wherein the computer program product, when executed by a processor, cause the processor to implement the steps of the method for generating a semi-static HARQ-ACK codebook according to any one claims 1 to 5.

11. A readable storage medium, wherein the readable storage medium stores a program or instructions, and when the program or instructions are executed by a processor, cause the processor to implement the steps of the method for generating a semi-static HARQ-ACK codebook according to any one of claims 1 to 5.

## Patentansprüche

1. Verfahren zur Erzeugung eines halbstatischen hybriden automatischen Wiederholungsanforderungsbestätigungs-, HARQ-ACK-, Codebuchs, wobei das Verfahren von einem Endgerät (100) durchgeführt wird und Folgendes umfasst:
Bestimmen (21), basierend auf mindestens einem von einem K₁-Satz, entsprechend einem ersten physikalischen gemeinsam genutzten Downlink-Kanal, PDSCH, und einem K₁-Satz, entsprechend einem zweiten PDSCH, eines *K*₁-Satzes, der einem aktiven Uplink-Bandbreitenteil, UL-BWP, zugeordnet ist;
Bestimmen (22), für einen jeden *K*_{1,*k*}-Wert in dem *K*₁-Satz, der dem aktiven UL-BWP zugeordnet ist, basierend auf mindestens einer von einer Time Domain Ressource Assignment-, TDRA-, Tabelle, entsprechend dem ersten PDSCH, und einer TDRA-Tabelle, entsprechend dem zweiten PDSCH, eines Kandidaten-PDSCH-Empfangsereignisses in einem Slot, entsprechend dem *K*_{1,*k*}-Wert, wobei k = 0, ... , M-1 und M eine Menge von Elementen in dem *K*₁-Satz ist, der dem aktiven UL-BWP zugeordnet ist; und
Bestimmen (23) des halbstatischen HARQ-ACK-Codebuchs basierend auf dem Kandidaten-PDSCH-Empfangsereignis;
wobei das Bestimmen (22), basierend auf mindestens einer von einer TDRA-Tabelle, entsprechend dem ersten PDSCH, und einer TDRA-Tabelle, entsprechend dem zweiten PDSCH, eines Kandidaten-PDSCH-Empfangsereignisses in einem Slot, entsprechend dem *K*_{1,*k*}-Wert, Folgendes umfasst:
in einem Fall, dass der *K*_{1,*k*}-Wert zu einem Schnittmengensatz des *K*₁-Satzes, entsprechend dem ersten PDSCH, und des *K*₁-Satzes, entsprechend dem zweiten PDSCH, gehört, Bestimmen, basierend auf einem Vereinigungssatz eines Zeilenindex der TDRA-Tabelle, entsprechend dem ersten PDSCH, und eines Zeilenindex der TDRA-Tabelle, entsprechend dem zweiten PDSCH, des Kandidaten-PDSCH-Empfangsereignisses in dem Slot, entsprechend dem *K*₁*_{,k}-*Wert; und
in einem Fall, dass der *K*_{1,*k*}-Wert nicht zu dem Schnittmengensatz gehört, Bestimmen, basierend auf dem Zeilenindex der TDRA-Tabelle, entsprechend dem ersten PDSCH, oder dem Zeilenindex der TDRA-Tabelle, entsprechend dem zweiten PDSCH, des Kandidaten-PDSCH-Empfangsereignisses in dem Slot, entsprechend dem *K*₁*_{,x}-*Wert,
wobei der erste PDSCH ein Unicast-PDSCH ist und der zweite PDSCH ein Multicast-PDSCH ist.

2. Verfahren nach Anspruch 1, wobei, in einem Fall, dass der *K*_{1,*k*}-Wert nicht zu dem Schnittmengensatz gehört, das Bestimmen, basierend auf dem Zeilenindex der TDRA-Tabelle, entsprechend dem ersten PDSCH, oder dem Zeilenindex der TDRA-Tabelle, entsprechend dem zweiten PDSCH, des Kandidaten-PDSCH-Empfangsereignisses in dem Slot, entsprechend dem *K*_{1,*k*}-Wert, mindestens eines der Folgenden umfasst:
in einem Fall, dass der *K*_{1,*k*}-Wert zu dem *K*₁-Satz, entsprechend dem ersten PDSCH, gehört, Bestimmen, basierend auf dem Zeilenindex der TDRA-Tabelle, entsprechend dem ersten PDSCH, des Kandidaten-PDSCH-Empfangsereignisses in dem Slot, entsprechend dem *K*₁*_{,k}-*Wert; und
in einem Fall, dass der *K*_{1,*k*}-Wert zu dem *K*₁-Satz, entsprechend dem zweiten PDSCH, gehört, Bestimmen, basierend auf dem Zeilenindex der TDRA-Tabelle, entsprechend dem zweiten PDSCH, des Kandidaten-PDSCH-Empfangsereignisses in dem Slot, entsprechend dem *K*₁*_{,k}-*Wert.

3. Verfahren nach einem der Ansprüche 1 bis 2, wobei der erste PDSCH und der zweite PDSCH unterschiedlichen DCI-Formaten entsprechen.

4. Verfahren nach Anspruch 1, wobei das Bestimmen (21), basierend auf mindestens einem von einem *K*₁-Satz, entsprechend einem ersten PDSCH, und einem *K*₁-Satz, entsprechend einem zweiten PDSCH, eines *K*₁-Satzes, der einem aktiven UL-BWP zugeordnet ist, eines der Folgenden umfasst:
Verwenden eines Vereinigungssatzes des *K*₁-Satzes, entsprechend dem ersten PDSCH, und des *K*₁-Satzes, entsprechend dem zweiten PDSCH, als den K₁-Satz, der dem aktiven UL-BWP zugeordnet ist;
Verwenden des *K*₁-Satzes, entsprechend dem ersten PDSCH, als den K₁-Satz, der dem aktiven UL-BWP zugeordnet ist; und
Verwenden des *K*₁-Satzes, entsprechend dem zweiten PDSCH, als den K₁-Satz, der dem aktiven UL-BWP zugeordnet ist.

5. Verfahren nach einem der Ansprüche 1 bis 4, wobei der erste PDSCH und der zweite PDSCH unterschiedlichen TDRA-Tabellen und/oder *K*₁-Sätzen entsprechen.

6. Vorrichtung (100) zur Erzeugung eines halbstatischen hybriden automatischen Wiederholungsanforderungsbestätigungs-, HARQ-ACK-, Codebuchs, umfassend:
ein erstes Bestimmungsmodul (101), das zu Folgendem konfiguriert ist: basierend auf mindestens einem von einem K₁-Satz, entsprechend einem ersten physikalischen gemeinsam genutzten Downlink-Kanal, PDSCH, und einem *K*₁-Satz, entsprechend einem zweiten PDSCH, Bestimmen eines *K*₁-Satzes, der einem aktiven Uplink-Bandbreitenteil, UL-BWP, zugeordnet ist;
ein zweites Bestimmungsmodul (102), das zu Folgendem konfiguriert ist: für einen jeden *K*_{1,*k*}-Wert in dem *K*₁-Satz, der dem aktiven UL-BWP zugeordnet ist, basierend auf mindestens einer von einer Time Domain Ressource Assignment-, TDRA-, Tabelle, entsprechend dem ersten PDSCH, und einer TDRA-Tabelle, entsprechend dem zweiten PDSCH, Bestimmen eines Kandidaten-PDSCH-Empfangsereignisses in einem Slot, entsprechend dem *K*₁*_{,k}-*Wert, wobei k = 0, ... , M-1 und M die Menge von Elementen in dem *K*₁-Satz ist, der dem aktiven UL-BWP zugeordnet ist; und
ein drittes Bestimmungsmodul (103), das dazu konfiguriert ist, das halbstatische HARQ-ACK-Codebuch, basierend auf dem Kandidaten-PDSCH-Empfangsereignis, zu bestimmen;
wobei das zweite Bestimmungsmodul (102) zur Durchführung von Folgendem konfiguriert ist:
in einem Fall, dass der *K*_{1,*k*}-Wert zu einem Schnittmengensatz des *K*₁-Satzes, entsprechend dem ersten PDSCH, und des *K*₁-Satzes, entsprechend dem zweiten PDSCH, gehört, Bestimmen, basierend auf einem Vereinigungssatz eines Zeilenindex der TDRA-Tabelle, entsprechend dem ersten PDSCH, und eines Zeilenindex der TDRA-Tabelle, entsprechend dem zweiten PDSCH, des Kandidaten-PDSCH-Empfangsereignisses in dem Slot, entsprechend dem *K*_{1,}*ₖ-*Wert; und
in einem Fall, dass der *K*_{1,*k*}-Wert nicht zu dem Schnittmengensatz gehört, Bestimmen, basierend auf dem Zeilenindex der TDRA-Tabelle, entsprechend dem ersten PDSCH, oder dem Zeilenindex der TDRA-Tabelle, entsprechend dem zweiten PDSCH, des Kandidaten-PDSCH-Empfangsereignisses in dem Slot, entsprechend dem *K*_{1,}*ₖ-*Wert,
wobei der erste PDSCH ein Unicast-PDSCH ist und der zweite PDSCH ein Multicast-PDSCH ist.

7. Vorrichtung (100) nach Anspruch 6, wobei das erste Bestimmungsmodul (101) zur Durchführung von Folgendem konfiguriert ist:
Verwenden eines Vereinigungssatzes des *K*₁-Satzes, entsprechend dem ersten PDSCH, und des *K*₁-Satzes, entsprechend dem zweiten PDSCH, als den *K*₁-Satz, der dem aktiven UL-BWP zugeordnet ist;
Verwenden des *K*₁-Satzes, entsprechend dem ersten PDSCH, als den *K*₁-Satz, der dem aktiven UL-BWP zugeordnet ist; und
Verwenden des *K*₁-Satzes, entsprechend dem zweiten PDSCH, als den *K*₁-Satz, der dem aktiven UL-BWP zugeordnet ist.

8. Vorrichtung (100) nach Anspruch 6, wobei das zweite Bestimmungsmodul (102) zur Durchführung von mindestens einem der folgenden konfiguriert ist:
in einem Fall, dass der *K*_{1,*k*}-Wert zu dem *K*₁-Satz, entsprechend dem ersten PDSCH, gehört, Bestimmen, basierend auf dem Zeilenindex der TDRA-Tabelle, entsprechend dem ersten PDSCH, des Kandidaten-PDSCH-Empfangsereignisses in dem Slot, entsprechend dem *K*₁*_{,k}-*Wert; und
in einem Fall, dass der *K*_{1,*k*}-Wert zu dem *K*₁-Satz, entsprechend dem zweiten PDSCH, gehört, Bestimmen, basierend auf dem Zeilenindex der TDRA-Tabelle, entsprechend dem zweiten PDSCH, des Kandidaten-PDSCH-Empfangsereignisses in dem Slot, entsprechend dem *K*_{1,}*ₖ-*Wert.

9. Vorrichtung (100) nach einem der Ansprüche 6 bis 8, wobei der erste PDSCH und der zweite PDSCH unterschiedlichen DCI-Formaten entsprechen.

10. Computerprogrammprodukt, das in einem nichtflüchtigen computerlesbaren Speichermedium gespeichert ist, wobei das Computerprogrammprodukt, wenn es von einem Prozessor ausgeführt wird, den Prozessor veranlasst, die Schritte des Verfahrens zur Erzeugung eines halbstatischen HARQ-ACK-Codebuchs nach einem der Ansprüche 1 bis 5 zu implementieren.

11. Lesbares Speichermedium, wobei das lesbare Speichermedium ein Programm oder Anweisungen speichert und, wenn das Programm oder die Anweisungen durch einen Prozessor ausgeführt werden, den Prozessor veranlasst, die Schritte des Verfahrens zur Erzeugung eines halbstatischen HARQ-ACK-Codebuchs nach einem der Ansprüche 1 bis 5 zu implementieren.

## Revendications

1. Procédé de génération d'un livre de codes d'accusé réception de demande de répétition automatique hybride, HARQ-ACK, semi-statique, le procédé étant exécuté par un terminal (100) et comprenant :
déterminer (21), sur la base d'au moins un entre un ensemble *K*₁ correspondant à un premier canal physique partagé de liaison descendante, PDSCH, et un ensemble *K*₁ correspondant à un second PDSCH, un ensemble *K*₁ associé à une partie de largeur de bande de liaison montante, UL BWP, active ;
déterminer (22), pour chaque valeur *K*_{1,*k*} dans l'ensemble *K*₁ associé à l'UL BWP active, sur la base d'au moins une entre une table d'affectation de ressources dans le domaine temporel, TDRA, correspondant au premier PDSCH et une table TDRA correspondant au second PDSCH, une occasion de réception de PDSCH candidat dans un créneau correspondant à la valeur *K*₁*_{,k},* où k = 0, ... , M-1, et M est une quantité d'éléments dans l'ensemble *K*₁ associé à l'UL BWP active ; et
déterminer (23) le livre de codes HARQ-ACK semi-statique sur la base de l'occasion de réception de PDSCH candidat ;
dans lequel la détermination (22), sur la base d'au moins une entre une table TDRA correspondant au premier PDSCH et une table TDRA correspondant au second PDSCH, d'une occasion de réception de PDSCH candidat dans un créneau correspondant à la valeur *K*_{1*,k*} comprend :
dans le cas où la valeur *K*_{1,*k*} appartient à un ensemble d'intersection de l'ensemble *K*₁ correspondant au premier PDSCH et de l'ensemble *K*₁ correspondant au second PDSCH, déterminer, sur la base d'un ensemble d'union d'un index de ligne de la table TDRA correspondant au premier PDSCH et d'un index de ligne de la table TDRA correspondant au second PDSCH, l'occasion de réception de PDSCH candidat dans le créneau correspondant à la valeur *K*₁*_{,k} ;* et
dans le cas où la valeur *K*_{1*,k*} n'appartient pas à l'ensemble d'intersection, déterminer, sur la base de l'index de ligne de la table TDRA correspondant au premier PDSCH ou de l'index de ligne de la table TDRA correspondant au second PDSCH, l'occasion de réception de PDSCH candidat dans le créneau correspondant à la valeur *K*₁*_{,k},*
dans lequel le premier PDSCH est un PDSCH d'envoi individuel, et le second PDSCH est un PDSCH de multidiffusion.

2. Procédé selon la revendication 1, dans lequel, dans le cas où la valeur *K*_{1*,k*} n'appartient pas à l'ensemble d'intersection, la détermination, sur la base de l'index de ligne de la table TDRA correspondant au premier PDSCH ou de l'index de ligne de la table TDRA correspondant au second PDSCH, de l'occasion de réception de PDSCH candidat dans le créneau correspondant à la valeur *K*_{1,*k*} comprend au moins l'une des opérations suivantes :
dans le cas où la valeur *K*_{1,*k*} appartient à l'ensemble *K*₁ correspondant au premier PDSCH, déterminer, sur la base de l'index de ligne de la table TDRA correspondant au premier PDSCH, l'occasion de réception de PDSCH candidat dans le créneau correspondant à la valeur *K*_{1,}*ₖ ;* et
dans le cas où la valeur *K*_{1,*k*} appartient à l'ensemble *K*₁ correspondant au second PDSCH, déterminer, sur la base de l'index de ligne de la table TDRA correspondant au second PDSCH, l'occasion de réception de PDSCH candidat dans le créneau correspondant à la valeur *K*₁*_{,k}.*

3. Procédé selon l'une quelconque des revendications 1 à 2, dans lequel le premier PDSCH et le second PDSCH correspondent à des formats DCI différents.

4. Procédé selon la revendication 1, dans lequel la détermination (21), sur la base d'au moins un entre un ensemble *K*₁ correspondant à un premier PDSCH et un ensemble *K*₁ correspondant à un second PDSCH, d'un ensemble *K*₁ associé à une UL BWP active comprend l'une des opérations suivantes :
utiliser un ensemble d'union de l'ensemble *K*₁ correspondant au premier PDSCH et de l'ensemble *K*₁ correspondant au second PDSCH comme ensemble *K*₁ associé à l'UL BWP active ;
utiliser l'ensemble *K*₁ correspondant au premier PDSCH comme ensemble *K*₁ associé à l'UL BWP active ; et
utiliser l'ensemble *K*₁ correspondant au second PDSCH comme ensemble *K*₁ associé à l'UL BWP active.

5. Procédé selon l'une quelconque des revendications 1 à 4, dans lequel le premier PDSCH et le second PDSCH correspondent à des tables TDRA et/ou à des ensembles *K*₁ différents.

6. Appareil (100) de génération d'un livre de codes d'accusé réception de demande de répétition automatique hybride, HARQ-ACK, semi-statique, comprenant :
un premier module de détermination (101), configuré pour : sur la base d'au moins un entre un ensemble *K*₁ correspondant à un premier canal physique partagé de liaison descendante, PDSCH, et un ensemble *K*₁ correspondant à un second PDSCH, déterminer un ensemble *K*₁ associé à une partie de largeur de bande de liaison montante, UL BWP, active ;
un deuxième module de détermination (102), configuré pour : pour chaque valeur *K*_{1*,k*} dans l'ensemble *K*₁ associé à la UL BWP active, sur la base d'au moins une entre une table d'affectation de ressources dans le domaine temporel, TDRA, correspondant au premier PDSCH et une table TDRA correspondant au second PDSCH, déterminer une occasion de réception de PDSCH candidat dans un créneau correspondant à la valeur *K*₁*_{,k},* où k = 0, ... , M-1, et M est la quantité d'éléments dans l'ensemble *K*₁ associé à l'UL BWP active ; et
un troisième module de détermination (103), configuré pour déterminer le livre de codes HARQ-ACK semi-statique sur la base de l'occasion de réception de PDSCH candidat ;
dans lequel le deuxième module de détermination (102) est configuré pour exécuter :
dans le cas où la valeur *K*_{1,*k*} appartient à un ensemble d'intersection de l'ensemble *K*₁ correspondant au premier PDSCH et de l'ensemble *K*₁ correspondant au second PDSCH, déterminer, sur la base d'un ensemble d'union d'un index de ligne de la table TDRA correspondant au premier PDSCH et d'un index de ligne de la table TDRA correspondant au second PDSCH, l'occasion de réception de PDSCH candidat dans le créneau correspondant à la valeur *K*_{1,}*ₖ ;* et
dans le cas où la valeur *K*_{1,*k*} n'appartient pas à l'ensemble d'intersection, déterminer, sur la base de l'index de ligne de la table TDRA correspondant au premier PDSCH ou de l'index de ligne de la table TDRA correspondant au second PDSCH, l'occasion de réception de PDSCH candidat dans le créneau correspondant à la valeur *K*_{1,}*ₖ,*
dans lequel le premier PDSCH est un PDSCH d'envoi individuel, et le second PDSCH est un PDSCH de multidiffusion.

7. Appareil (100) selon la revendication 6, dans lequel le premier module de détermination (101) est configuré pour effectuer l'une des opérations suivantes :
utiliser un ensemble d'union de l'ensemble *K*₁ correspondant au premier PDSCH et de l'ensemble *K*₁ correspondant au second PDSCH comme ensemble *K*₁ associé à l'UL BWP active ;
utiliser l'ensemble *K*₁ correspondant au premier PDSCH comme ensemble *K*₁ associé à l'UL BWP active ; et
utiliser l'ensemble *K*₁ correspondant au second PDSCH comme ensemble *K*₁ associé à l'UL BWP active.

8. Appareil (100) selon la revendication 6, dans lequel le deuxième module de détermination (102) est configuré pour effectuer au moins l'une des opérations suivantes :
dans le cas où la valeur *K*_{1,*k*} appartient à l'ensemble *K*₁ correspondant au premier PDSCH, déterminer, sur la base de l'index de ligne de la table TDRA correspondant au premier PDSCH, l'occasion de réception de PDSCH candidat dans le créneau correspondant à la valeur *K*_{1,}*ₖ ;* et
dans le cas où la valeur *K*_{1,*k*} appartient à l'ensemble *K*₁ correspondant au second PDSCH, déterminer, sur la base de l'index de ligne de la table TDRA correspondant au second PDSCH, l'occasion de réception de PDSCH candidat dans le créneau correspondant à la valeur *Kₗ,ₓ.*

9. Appareil (100) selon l'une quelconque des revendications 6 à 8, dans lequel le premier PDSCH et le second PDSCH correspondent à des formats DCI différents.

10. Produit de programme informatique, stocké sur un support de stockage non volatil lisible par ordinateur, dans lequel le produit de programme informatique, lorsqu'il est exécuté par un processeur, amène le processeur à mettre en œuvre les étapes du procédé de génération d'un livre de codes HARQ-ACK semi-statique selon l'une quelconque des revendications 1 à 5.

11. Support de stockage lisible, dans lequel le support de stockage lisible stocke un programme ou des instructions, et lorsque le programme ou les instructions sont exécutés par un processeur, amènent le processeur à mettre en œuvre les étapes du procédé de génération d'un livre de codes HARQ-ACK semi-statique selon l'une quelconque des revendications 1 à 5.
